# EUROPEAN PATENT SPECIFICATION

(11) **EP 4 317 894 B1**
(45) Date of publication and mention of the grant of the patent: **02.09.2026**
(21) Application number: 22188147.7
(22) Date of filing: 01.08.2022
(51) Int. Cl.: F28F 3/12, F28F 9/00, F28F 9/02, H05K 7/20

(54) **REFRIGERANT MODULE FOR THERMAL MANAGEMENT SYSTEM**
KÄLTEMITTELMODUL FÜR EIN THERMISCHES MANAGEMENTSYSTEM
MODULE RÉFRIGÉRANT POUR SYSTÈME DE GESTION THERMIQUE

(43) Date of publication of application: 07.02.2024
(73) Proprietor: Valeo Electrification, 95892 Cergy Pontoise (FR)
(72) Inventor: FIENE, Andreas, 96476 Bad Rodach (DE); HEDAOO, Satyam, 600130 Chennai (IN)
(74) Representative: Valeo Powertrain Systems

(56) References cited:
- WO-A1-2021/048095
- CN-A- 112 606 676
- US-A1- 2010 071 639
- US-A1- 2019 316 499
- US-A1- 2020 309 472

## Description

This disclosure relates to a refrigerant module for a thermal management system.

### Background Art

The development of electric vehicles has brought new issues to the automotive field, in particular in view of the limited autonomy of the electric battery as well as the limited space that can be dedicated to the thermal management system because of the positioning of the electric battery at the front of the vehicle. For these reasons, it is more and more searched for compact and light thermal management systems.

US2019/316499, US2010/071639, CN112606676 disclose different kinds of fluid distribution units. CN 112606676 in particular discloses a refrigerant module having the features of the preamble of claim 1.

### Summary

This disclosure improves the situation. The invention is as defined in claim 1.

It is proposed a refrigerant module for a thermal management system, comprising a first refrigerant distribution unit, and a second refrigerant distribution unit, each of the first and second refrigerant distribution unit comprising two opposite plates, respectively called channel plate and back plate, shaped to form channels for distributing refrigerant fluid in said thermal management system, the first refrigerant distribution unit and the second refrigerant distribution unit being fixed together, the first refrigerant distribution unit being disposed inclined relative to the second refrigerant distribution unit.

The two refrigerant distribution units being mounted together, with a given angle between them, the refrigerant module as per the disclosure is compact and well adapted to equip an electric vehicle.

In another aspect, an angle between the first refrigerant distribution unit and the second refrigerant distribution unit is comprised in a range of values of 45° to 110°.

In another aspect, the angle between the first refrigerant distribution unit and the second refrigerant distribution unit is 90°.

In another aspect, the first refrigerant distribution unit comprises an interface configured to be fluidly connected to the second refrigerant distribution unit.

In another aspect, the interface comprises at least one opening for the refrigerant fluid to flow from one of the first and second refrigerant distribution units to the other of the first and second refrigerant distribution units.

In another aspect, the interface comprises a bar resting against the back plate of the second refrigerant distribution unit.

In another aspect, the first refrigerant distribution unit and the second refrigerant distribution unit are fixed together via the interface.

In another aspect, the interface comprises holes, called fixation holes, and the second refrigerant distribution unit comprises holes, called fixation holes, the fixation holes of the interface facing the fixation holes of the second refrigerant distribution unit to screw together the first refrigerant distribution unit and the second refrigerant distribution unit.

In another aspect, the interface and the second refrigerant distribution unit are brazed together.

The invention also related to a thermal management system comprising a refrigerant module as described above.

In another aspect, the thermal management system comprises a fluid source in fluid communication with and attached to the refrigerant module, the fluid source including at least one of a condenser, a chiller, a receiver-drier, a compressor or a coolant container.

In another aspect, the thermal management system comprises at least a valve attached to the first refrigerant distribution unit.

In another aspect, the fluid source is attached to the second refrigerant distribution unit.

### Brief Description of Drawings

Other features, details and advantages will be shown in the following detailed description and on the figures, on which:
**Fig. 1**

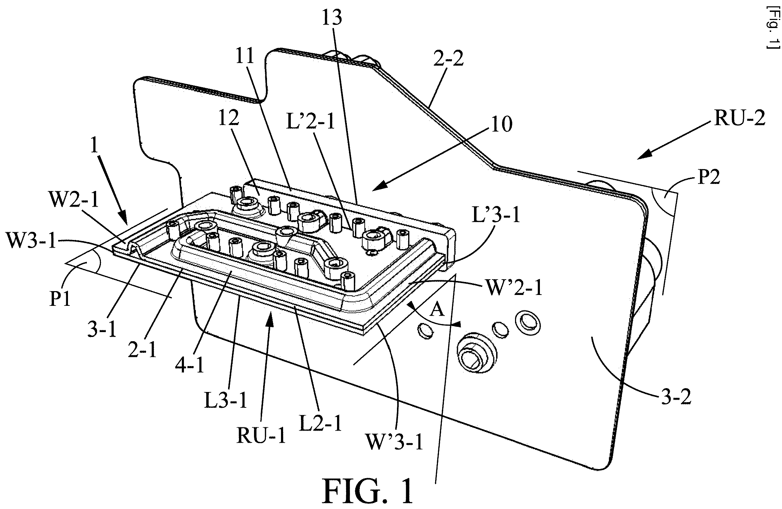

   [Fig. 1] is a perspective view of a bottom of a refrigerant module according to an embodiment of the present disclosure.
**Fig. 2**

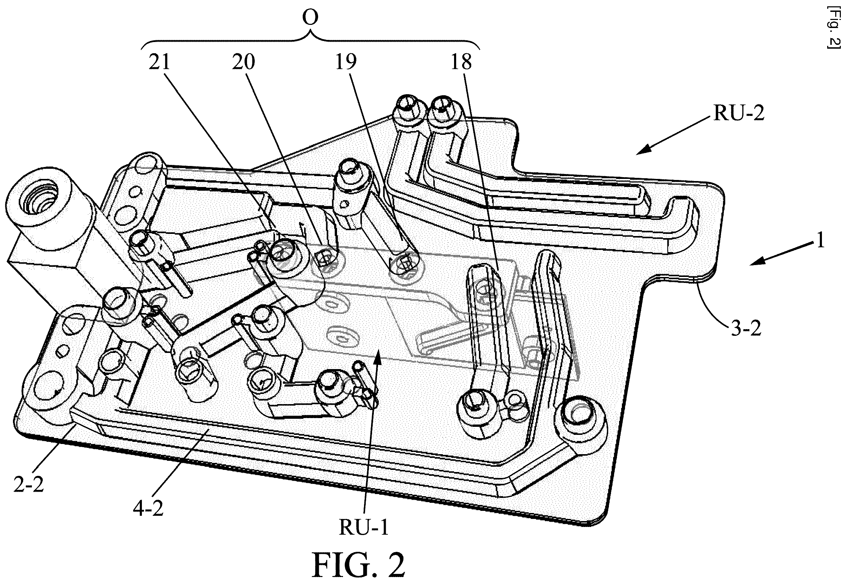

   [Fig. 2] is a perspective view of a top of the refrigerant module of figure 1.
**Fig. 3**

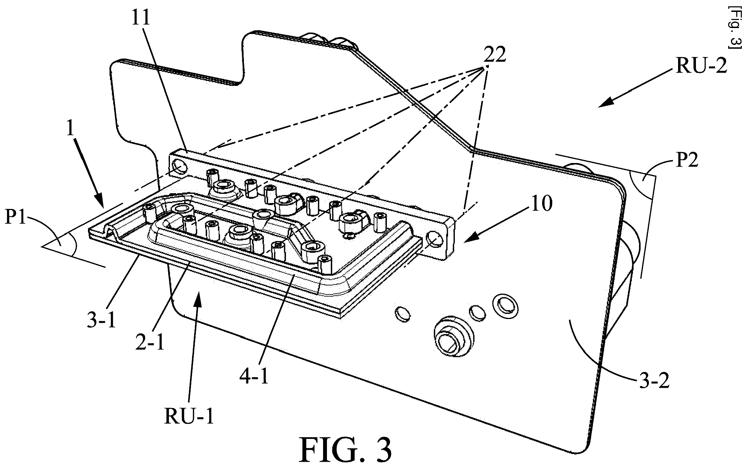

   [Fig. 3] is a perspective view of the bottom of the refrigerant module of figure 1 according to a first alternative.
**Fig. 4**

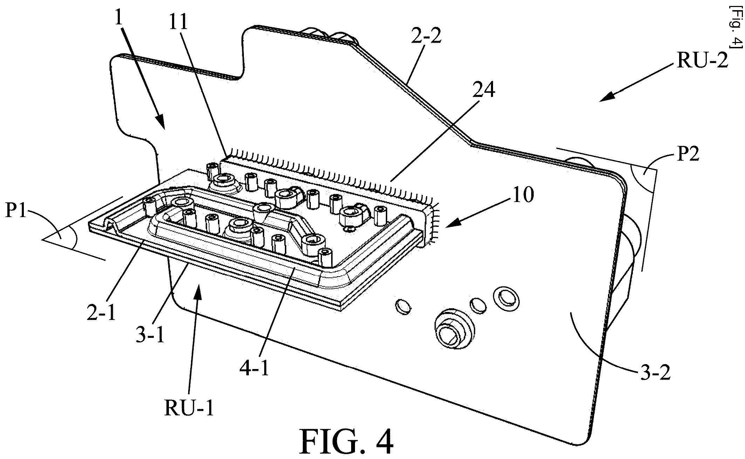

   [Fig. 4] is a perspective view of the bottom of the refrigerant module of figure 1 according to a second alternative.

### Description of Embodiments

The present invention relates to a refrigerant module for a thermal management system, referred to as 1 in the figures. The refrigerant module comprises a first refrigerant distribution unit RU-1 and a second refrigerant unit RU-2. In the illustrated embodiment, the first refrigerant distribution unit RU-1 is smaller than the second distribution unit RU-2, though the invention is not limited to this arrangement.

As can be seen from figures 1, 3 and 4, the first refrigerant distribution unit RU-1 comprises two connected plates, a first plate 2-1 and a second plate 3-1, the two plates facing each other and fixed together. The first plate 2-1 comprises tracks and is later called refrigerant plate 2-1. The second plate 3-1 is essentially flat and is later called back plate 3-1. The refrigerant plate 2-1 and the back plate 3-1 are sealed together to delimit a closed space to form channels 4-1 of the refrigerant module 1.

As can be seen from figure 2, the second refrigerant distribution unit RU-2 comprises two connected plates, a first plate 2-2 and a second plate 3-2, the two plates facing each other and fixed together. The first plate 2-2 comprises tracks and is later called refrigerant plate 2-2. The second plate 3-2 is essentially flat and is later called back plate 3-2. The refrigerant plate 2-2 and the back plate 3-2 are sealed together to delimit a closed space to form other channels 4-2 of the refrigerant module 1.

The channels 4-1, 4-2 ensure distribution of the refrigerant fluid in components of the thermal management system, like a compressor, an evaporator and/or a condenser (not shown).

Different components of the thermal management system can be attached to the first refrigerant refrigerant unit RU-1 and/or the second refrigerant distribution unit RU-2 like at least: a condenser and/or a water condenser and/or a heat exchanger (evaporator and/or chiller) and/or PT (pressure temperature) sensors, and/or valves and/o AC (air conditioning) lines.

As can be seen from the figures, the refrigerant plate 2-1 and the back plate 3-1 extend longitudinally along planes that are parallel to a plane referred to as P1. Similarly, the refrigerant plate 2-1 and the back plate 3-1 extend longitudinally along planes that are parallel to a plane referred to as P2 in the figures. P1 and P2 can respectively be defined as the first refrigerant distribution unit (longitudinal) plane and second refrigerant distribution unit (longitudinal) plane.

The planes P1 and P2 are inclined one to another with an angle referred to as A (figure 1). This arrangement ensures high compactness of the refrigerant module 1. It also guarantees that the refrigerant module 1 can be adapted to different kinds of vehicle front ends, even for electric vehicles, where the thermal management systems undergo many constraints relative to the packaging.

Advantageously, the angle A is comprised in the range of values of 45° to 110°, depending on the thermal management packaging. Preferably, the angle A is 90°, meaning that the planes P-1 and P-2 are perpendicular.

In the figures, the refrigerant plate 2-1 and the back plate 3-1 is a rectangular and extends between two couples of opposite edges, edges L2-1, L'2-1 representing lengths of the refrigerant plate 2-1 and edges W2-1, W2-1 representing widths of the refrigerant plate 2-1. Similarly, the back plate 3-1 of the first refrigerant distribution unit RU-1 extends between two couples of opposite edges, edges L3-1, L'3-1 representing lengths of the back plate 3-1 and edges W3-1, W3-1representing widths of the back plate 3-2.

As can be seen from figures 1, 3 and 4, the first refrigerant distribution unit RU-1 comprises an interface 10 to connect the first refrigerant distribution unit RU-1 to the second refrigerant distribution unit RU-2. The interface 10 comprises a rod 11 that has a general shape of a flat parallelepiped, even though the invention is not limited to this configuration.

The rod 11 comprises a front face 12 and a back face 13, the back face 13 being opposite to the front face 12. Each of the front face 12 and the back face 13 is delimited by lengths and widths of the rod 11.

As can be seen from the figures, the back face 13 of the rod 11 rests against the back plate 3-2 of the second refrigerant distribution unit RU-2.

The rod 11 is fixed to the two plates 2-1, 3-1 of the first refrigerant distribution unit RU-1, for instance is mounted integrally with the two plates 2-1, 3-1. The lengths of the rod 11 extend parallel to and are in contact with the edges L'2-1, L'3-1 of the refrigerant plate 2-1 and the back plate 3-1.

The rod 11 is provided with openings O that are configured to receive channels 4-2. The first refrigerant distribution unit RU-1 and the second refrigerant distribution unit RU-2 are configured to be directly connected thanks to the openings O. On the illustrated embodiment, the rod 11 comprises four openings O listed 18, 19, 20 and 21 (see figure 2).

The first refrigerant distribution unit RU-1 and the second refrigerant distribution unit RU-2 are connected, either by a fixed connection (figure 3) or by a permanent joint (figure 4).

In figure 3, the first refrigerant distribution unit RU-1 and the second refrigerant distribution unit RU-2 are screwed together. The interface 10 comprises holes 22, called fixation holes, and the second refrigerant distribution unit RU-2 comprises holes 22, called fixation holes, the fixation holes of the interface facing the fixation holes of the second refrigerant distribution unit to screw together the first refrigerant distribution unit RU-1 and the second refrigerant distribution unit RU-2. In figure 3, the holes are represented by dotted lines.

In figure 4, the refrigerant module 1 comprises a brazed joint 24 between the first refrigerant distribution unit RU-1 and the second refrigerant distribution unit RU-2 around the interface 10. According to this alternative, the first refrigerant unit RU-1, including the interface 10, and the second refrigerant unit RU-2 are preferably made of aluminum, which allows a simple method of manufacturing with the brazing in one step.

The inclination of the refrigerant distribution unit implies that the thermal management (AC) loop can be defined as a three dimensional layout, inducing high-compactness and high-component density of the refrigerant module and of the air-conditioning system. The direct connection of the two refrigerant plates, without additional AC lines ensures a simple installation of the refrigerant module. Also, thanks to the two inclined directly connected refrigerant plates, the split and distribution of the AC components can be variable.

Please note that the invention is not limited to two refrigerant distribution units; the refrigerant module can be provided with more than two units.

## Claims

1. Thermal management system for an air-conditioning system of a vehicle, the thermal management system comprising a refrigerant module, the refrigerant module comprising a first refrigerant distribution unit (RU-1), the first refrigerant distribution unit comprising two opposite plates (2-1, 3-1), respectively called channel plate (2-1) and back plate (3-1) shaped to form channels (4-1) for distributing refrigerant fluid in said thermal management system, **characterized in that** it further comprises a second refrigerant distribution unit (RU-2), comprising two opposite plates (2-2, 3-2), respectively called channel plate (2-2) and back plate (3-2), shaped to form channels (4-2) for distributing refrigerant fluid in said thermal management system, the first refrigerant distribution unit (RU-1) and the second refrigerant distribution unit (RU-2) being fixed together, the first refrigerant distribution unit (RU-1) being disposed inclined relatively to the second refrigerant distribution unit (RU-2).

2. Thermal management system according to claim 1, wherein an angle (A) between the first refrigerant distribution unit (RU-1) and the second refrigerant distribution unit (RU-2) is comprised in a range of values of 45° to 110°.

3. Thermal management system according to any of the preceding claims, wherein the first refrigerant distribution unit (RU-1) comprises an interface (10) configured to be fluidly connected to the second refrigerant distribution unit (RU-2).

4. Thermal management system according to the preceding claim, wherein the interface (10) comprises at least one opening (O) for the refrigerant fluid to flow from one of the first and second refrigerant distribution units to the other of the first and second refrigerant distribution units.

5. Thermal management system according to claim 3 or claim 4, wherein the interface (10) comprises a rod (11) resting against the back plate (3-2) of the second refrigerant distribution unit (RU-2).

6. Thermal management system according to any of claims 3 to 5, wherein the first refrigerant distribution unit (RU-1) and the second refrigerant distribution unit (RU-2) are fixed together via the interface (10).

7. Thermal management system according to the preceding claim, wherein the interface (10) comprises holes (22), called fixation holes, and the second refrigerant distribution unit (RU-2) comprises holes, called fixation holes, the fixation holes of the interface facing the fixation holes of the second refrigerant distribution unit to screw the first refrigerant distribution unit and the second refrigerant distribution unit.

8. Thermal management system according to claim 6, wherein the first refrigerant distribution unit (RU-1) and the second refrigerant distribution unit (RU-2) are brazed together.

9. Thermal management according to any of the preceding claims, comprising a fluid source in fluid communication with and attached to the refrigerant module, the fluid source including at least one of a condenser, a chiller, a receiver-drier, a compressor or a coolant container.

10. Thermal management system according to any of the preceding claims,, comprising at least a valve attached to the first refrigerant distribution unit (RU-1).

11. Thermal management system according to claim 9or 10, wherein the fluid source is attached to the second refrigerant distribution unit (RU-2).

## Patentansprüche

1. Thermisches Managementsystem für ein Klimaanlagensystem eines Fahrzeugs, wobei das thermische Managementsystem ein Kältemittelmodul umfasst, wobei das Kältemittelmodul eine erste Kältemittelverteilungseinheit (RU-1) umfasst, wobei die erste Kältemittelverteilungseinheit zwei gegenüberliegende Platten (2-1, 3-1) umfasst, die jeweils als Kanalplatte (2-1) und Rückplatte (3-1) bezeichnet werden und so geformt sind, dass sie Kanäle (4-1) zur Verteilung von Kältemittelfluid in dem thermischen Managementsystem bilden, **dadurch gekennzeichnet, dass** es ferner eine zweite Kältemittelverteilungseinheit (RU-2) umfasst, die zwei gegenüberliegende Platten (2-2, 3-2) umfasst, die jeweils als Kanalplatte (2-2) und Rückplatte (3-2) bezeichnet werden und so geformt sind, dass sie Kanäle (4-2) zur Verteilung von Kältemittelfluid in dem thermischen Managementsystem bilden, wobei die erste Kältemittelverteilungseinheit (RU-1) und die zweite Kältemittelverteilungseinheit (RU-2) miteinander befestigt sind, wobei die erste Kältemittelverteilungseinheit (RU-1) relativ zur zweiten Kältemittelverteilungseinheit (RU-2) geneigt angeordnet ist.

2. Thermisches Managementsystem nach Anspruch 1, wobei ein Winkel (A) zwischen der ersten Kältemittelverteilungseinheit (RU-1) und der zweiten Kältemittelverteilungseinheit (RU-2) in einem Wertebereich von 45° bis 110° liegt.

3. Thermisches Managementsystem nach einem der vorhergehenden Ansprüche, wobei die erste Kältemittelverteilungseinheit (RU-1) eine Schnittstelle (10) umfasst, die dazu konfiguriert ist, fluidisch mit der zweiten Kältemittelverteilungseinheit (RU-2) verbunden zu sein.

4. Thermisches Managementsystem nach dem vorhergehenden Anspruch, wobei die Schnittstelle (10) mindestens eine Öffnung (0) umfasst, damit das Kältemittelfluid von einer der ersten und zweiten Kältemittelverteilungseinheiten zur anderen der ersten und zweiten Kältemittelverteilungseinheiten fließen kann.

5. Thermisches Managementsystem nach Anspruch 3 oder Anspruch 4, wobei die Schnittstelle (10) einen Stab (11) umfasst, der an der Rückplatte (3-2) der zweiten Kältemittelverteilungseinheit (RU-2) anliegt.

6. Thermisches Managementsystem nach einem der Ansprüche 3 bis 5, wobei die erste Kältemittelverteilungseinheit (RU-1) und die zweite Kältemittelverteilungseinheit (RU-2) über die Schnittstelle (10) miteinander befestigt sind.

7. Thermisches Managementsystem nach dem vorhergehenden Anspruch, wobei die Schnittstelle (10) Löcher (22), genannt Befestigungslöcher, umfasst, und die zweite Kältemittelverteilungseinheit (RU-2) Löcher, genannt Befestigungslöcher, umfasst, wobei die Befestigungslöcher der Schnittstelle den Befestigungslöchern der zweiten Kältemittelverteilungseinheit gegenüberliegen, um die erste Kältemittelverteilungseinheit und die zweite Kältemittelverteilungseinheit zu verschrauben.

8. Thermisches Managementsystem nach Anspruch 6, wobei die erste Kältemittelverteilungseinheit (RU-1) und die zweite Kältemittelverteilungseinheit (RU-2) miteinander verlötet sind.

9. Thermisches Management nach einem der vorhergehenden Ansprüche, umfassend eine Fluidquelle in Fluidverbindung mit und befestigt an dem Kältemittelmodul, wobei die Fluidquelle mindestens eines von einem Kondensator, einem Kühler, einem Trockner-Sammler, einem Kompressor oder einem Kühlmittelbehälter umfasst.

10. Thermisches Managementsystem nach einem der vorhergehenden Ansprüche, umfassend mindestens ein Ventil, das an der ersten Kältemittelverteilungseinheit (RU-1) befestigt ist.

11. Thermisches Managementsystem nach Anspruch 9 oder 10, wobei die Fluidquelle an der zweiten Kältemittelverteilungseinheit (RU-2) befestigt ist.

## Revendications

1. Système de gestion thermique pour un système de climatisation d'un véhicule, le système de gestion thermique comprenant un module de réfrigérant, le module de réfrigérant comprenant une première unité de distribution de réfrigérant (RU-1), la première unité de distribution de réfrigérant comprenant deux plaques opposées (2-1, 3-1), respectivement appelées plaque de canal (2-1) et plaque arrière (3-1) formées pour former des canaux (4-1) pour distribuer le fluide réfrigérant dans ledit système de gestion thermique, **caractérisé en ce qu'**il comprend en outre une seconde unité de distribution de réfrigérant (RU-2), comprenant deux plaques opposées (2-2, 3-2), respectivement appelées plaque de canal (2-2) et plaque arrière (3-2), formées pour former des canaux (4-2) pour distribuer le fluide réfrigérant dans ledit système de gestion thermique, la première unité de distribution de réfrigérant (RU-1) et la seconde unité de distribution de réfrigérant (RU-2) étant fixées ensemble, la première unité de distribution de réfrigérant (RU-1) étant disposée inclinée relativement à la seconde unité de distribution de réfrigérant (RU-2).

2. Système de gestion thermique selon la revendication 1, dans lequel un angle (A) entre la première unité de distribution de réfrigérant (RU-1) et la seconde unité de distribution de réfrigérant (RU-2) est compris dans une plage de valeurs de 45° à 110°.

3. Système de gestion thermique selon l'une quelconque des revendications précédentes, dans lequel la première unité de distribution de réfrigérant (RU-1) comprend une interface (10) configurée pour être connectée fluidiquement à la seconde unité de distribution de réfrigérant (RU-2).

4. Système de gestion thermique selon la revendication précédente, dans lequel l'interface (10) comprend au moins une ouverture (0) pour que le fluide réfrigérant s'écoule de l'une des première et seconde unités de distribution de réfrigérant vers l'autre des première et seconde unités de distribution de réfrigérant.

5. Système de gestion thermique selon la revendication 3 ou la revendication 4, dans lequel l'interface (10) comprend une tige (11) reposant contre la plaque arrière (3-2) de la seconde unité de distribution de réfrigérant (RU-2).

6. Système de gestion thermique selon l'une quelconque des revendications 3 à 5, dans lequel la première unité de distribution de réfrigérant (RU-1) et la seconde unité de distribution de réfrigérant (RU-2) sont fixées ensemble via l'interface (10).

7. Système de gestion thermique selon la revendication précédente, dans lequel l'interface (10) comprend des trous (22), appelés trous de fixation, et la seconde unité de distribution de réfrigérant (RU-2) comprend des trous, appelés trous de fixation, les trous de fixation de l'interface faisant face aux trous de fixation de la seconde unité de distribution de réfrigérant pour visser la première unité de distribution de réfrigérant et la seconde unité de distribution de réfrigérant.

8. Système de gestion thermique selon la revendication 6, dans lequel la première unité de distribution de réfrigérant (RU-1) et la seconde unité de distribution de réfrigérant (RU-2) sont brasées ensemble.

9. Système de gestion thermique selon l'une quelconque des revendications précédentes, comprenant une source de fluide en communication fluidique avec et attachée au module de réfrigérant, la source de fluide comprenant au moins l'un parmi un condenseur, un refroidisseur, un déshydrateur-récepteur, un compresseur ou un conteneur de liquide de refroidissement.

10. Système de gestion thermique selon l'une quelconque des revendications précédentes, comprenant au moins une vanne attachée à la première unité de distribution de réfrigérant (RU-1).

11. Système de gestion thermique selon la revendication 9 ou 10, dans lequel la source de fluide est attachée à la seconde unité de distribution de réfrigérant (RU-2).
